# EUROPEAN PATENT APPLICATION

(11) **EP 0 872 601 A1**
(43) Date of publication of application: **21.10.1998**
(21) Application number: 98302270.8
(22) Date of filing: 25.03.1998
(51) Int. Cl.: E03C 1/04, E03B 7/07

(54) **Water treatment and delivery apparatus**

(30) Priority: 19.04.1997 GB 9707949
(71) Applicant: Walker, David MacAlistair, Leicestershire LE12 8NB (GB)
(72) Inventor: Walker, David MacAlistair, Leicestershire LE12 8NB (GB)
(74) Representative: SERJEANTS

(57) **Abstract**

A water treatment and delivery apparatus comprising a composite valve block (30) incorporating taps or faucets (32,34,40) for the independent supply of domestic hot water, domestic cold water and treated drinking water to a single delivery spout (36). The spout (36) preferably has separate channels (66,68,64) for conveying the three independent water flows to an output nozzle (38) of the spout (36) . The apparatus requires only two water supplies: domestic hot water and domestic (mains) cold water, unlike previous proposals which have needed three supplies. The packing material, which may be filter material and/or ion exchange resin, is easily replaceable since there are no under-sink filters to access.

## Description

### Field of the Invention

The invention relates to apparatus for treating and delivering water from a tap or faucet. Throughout this specification the word "tap" or "faucet" is used to denote any valve for controlling the flow of water through a delivery pipe.

### Background Art

Water filters are known for use in domestic environments for providing a supply of filtered mains water through a tap or faucet that is generally provided immediately adjacent a kitchen sink. A conventional supply apparatus for such a filtered water supply would be a narrow bore swan-neck delivery spout of internal diameter 1.0 cm or less, leading from a lever-actuated tap or faucet. The swan-neck delivery pipe would normally have one or two rubber O-ring seals at its lower end to enable it to seal with the tap or faucet while still permitting angular rotation. The entire installation would comprise a filter chamber at mains pressure beneath the kitchen sink, a mains water supply to the filter chamber and a connection between the filter chamber and the tap or faucet to pass filtered water through the swan-neck delivery pipe when the lever of the tap or faucet is actuated.

The under-sink filter chamber typically would contain a granular activated carbon filter medium which would remove from the mains water all sediment, particles and water-borne organisms. Filtration is real-time, meaning that the water flows directly from the mains supply through the filter to the tap or faucet and swan-neck delivery pipe when the tap or faucet lever is depressed. There is no intervening reservoir between the filter and the tap or faucet for the storage of a quantity of filtered water for supply when needed.

The above domestic water filtration and supply apparatus delivers good quality drinking water which is cleaner than unfiltered water. The supply is slower than that through a tap or faucet delivering unfiltered water at mains pressure, because a pressure gradient is established through the filter medium and that slows down the flow. The apparatus is used mainly to fill drinking glasses, jugs, kettles and cooking pans; so generally volumes of no more than one litre at a time are dispensed. The relatively slow delivery rate is therefore not a problem.

Typically the swan-neck delivery spout would be one that is dedicated to the delivery of drinking water only, and it would stand at the side of a kitchen sink, with its own tap or faucet, alongside the main hot and cold water supply taps which may be separate taps or a mixer tap delivering hot and cold water through a common spout. The only proposal to dispense hot, cold and filtered water through a common spout is the disclosure in WO-A-9107614 which requires three separate water supplies to the tap body: a hot water supply, a mains cold water supply and a supply of filtered drinking water.

In all prior installations, which have used under-sink filters, it has been a problem that the active carbon filter is ineffective in removing soluble ionic compounds from the water. A hard water supply, with a high content of dissolved calcium salts, cannot be converted to a soft water supply by passing it through an activated carbon filter.

It is known that hard water can be converted to soft water by removal of dissolved alkaline earth metal salts using an ion exchange resin. The resin removes the alkaline earth metal ions such as calcium ions Ca⁺⁺ and replaces them with sodium ions Na⁺. Such ion exchange resins are used in commercial water purification systems and provide good soft deionized water. The lifetime of an ion exchange resin, before it has to be recharged or replaced, is however considerably less than that of an active carbon filter. In an under-sink carbon filtration unit, the filter packing would be designed to be changed once every six months, once every year or once every three years according to the model and design of filtration unit. An ion exchange resin would need replacement every month. For that reason, no filtration unit has yet been offered for commercial sale with both a carbon filter and an ion exchange resin in the same unit. All attempts to design such a unit have followed either the design logic of attempting to extend substantially the lifetime of the ion exchange unit or attempting to provide in the under-sink filter a readily accessible and readily replaceable cartridge of ion exchange resin which can be replaced without spilling water from the filter unit, without disturbing the more permanent carbon filter and without requiring plumber's tools to open and close the filter unit housing.

There is also a need to provide other types of efficient treatment of water from a mains supply. In different circumstances the water may require disinfection to kill organisms or chemical treatment to remove contaminants such as lead or nitrates.

It is an object of the invention to provide a supply of drinking water that can be filtered and/or deionized and/or chemically treated, without the requirement of an under-sink filter and without the need for a separate swan-neck delivery spout at the side of the sink, alongside the main hot and cold water supply taps.

### The Invention

The invention provides a water treatment and delivery apparatus comprising a composite valve block incorporating taps or faucets for the independent supply of domestic hot water, domestic cold water and treated drinking water to a single delivery spout; characterized in that only two water supplies are provided to the valve block: a domestic hot water supply and a domestic cold water supply, and the tap or faucet for supplying treated drinking water to the delivery spout delivers water from the domestic cold water supply to a chamber containing packing material for filtering and/or deionizing and/or chemically treating the water as it passes to an output nozzle of the delivery spout.

The packing material may, in one embodiment of the invention, be encapsulated in a chamber of the delivery spout itself so that when the packing material is exhausted it may be replaced by the expedient of removing and discarding the spout and replacing it with a new spout packed with fresh material. In such an embodiment the delivery spout, which may be a swan-neck spout, has at one end its outlet nozzle and at the other end a swivel coupling incorporating at least one O-ring seal for coupling the delivery spout to the valve block in a manner that enables the spout to swivel from side to side in normal use and to be easily removable for replacement.

Preferably, however, the packing material is in a replaceable cartridge so that to replace spent packing material all that is necessary is to open the chamber, remove the cartridge, insert a new cartridge and re-close the chamber. That can be accomplished very simply and efficiently according to the invention by using the tap or faucet which controls the supply of treated drinking water to the delivery spout as the isolating means for isolating the opened chamber from the domestic mains water supply.

If desired the chamber may be in the spout and the water treatment material packed in a readily replaceable cartridge.

By packing the water treating material as a readily replaceable cartridge in an easily removable swan-neck delivery spout, the invention provides an effective solution to the aforementioned problems. To change the treatment material when its activity is exhausted requires simple removal of the old cartridge and replacement with a new cartridge containing fresh treatment material. Because the cartridge is a self-contained unit, there is little risk of contaminating its contents during replacement and the invention accordingly allows improved hygiene.

In another equally preferred embodiment of the invention the replaceable cartridge can be housed in the valve block for the tap or faucet, so that water delivered through the tap or faucet passes through the packing material before reaching the delivery spout.

In a further embodiment of the invention the replaceable filter cartridge can be housed in an above-sink stand-alone housing communicating with the tap or faucet and with the delivery spout.

The delivery spout may be a simple push fit into the valve block where it is sealed by the one or more O-rings carried by the swivel coupling of the spout. Sealing contact is made with a cylindrical inner surface of an outlet bore of the valve block of the tap or faucet, so that the delivery spout can swivel about its vertical axis without affecting the seal. If desired, a screw-thread at the end of the delivery spout can engage with a cooperating thread in the outlet bore of the valve block, to retain the spout in position. The O-ring seal or seals are still utilized for sealing, but the removal of the delivery spout then requires a preliminary turn or turns to disengage the screw threads before it can be lifted out of the valve block. The delivery spout unit may be made from metal or plastic.

The swan-neck delivery spout incorporates passages for allowing untreated hot and/or cold water to be delivered from the same delivery nozzle. With such a delivery spout the valve block has three taps, faucets or other valves: the first for controlling the supply of domestic hot water through a first water passage in the spout, the second for controlling the supply of domestic cold water through the same or a different water passage in the spout; and the third for controlling the supply of water through the packing material and through a preferably separate water passage in the spout to the delivery nozzle. The third such valve is supplied by the same untreated cold water mains supply as the second, but is used whenever filtered or softened drinking water is required from the delivery spout.

The invention derives a significant advantage over the known prior art by positioning the chamber containing the packing material downstream of the relevant tap or faucet that controls the supply of drinking water. In conventional under-sink water filtration installations steps have to be taken to isolate the filter chamber from mains water pressure before opening that chamber to replace the filter material. This invention utilizes the supply tap or faucet itself as the isolating means, and provides the replaceable cartridge in an over-sink location between the tap or faucet and the outlet nozzle of the delivery spout.

The packing material of the cartridge is preferably an ion exchange resin for softening hard water. Other alternatives are a filter material such as granular activated carbon; a source of chlorine for disinfection of the water, which may be accompanied by a filter material downstream to remove chlorine from the disinfected water; or materials for removing chemical contaminants such as lead or nitrates from the water.

Bacterial filters are available which are capable of removing bacteria from a water supply by filtration. One such range of filters takes the form of ceramic disc filters. Preferably the packing material of the cartridge includes one such filter before or after the packing materials discussed above. If the ceramic disc filter is positioned downstream of other filter material such as active carbon then it requires cleaning less frequently than if it were positioned upstream, but the upstream location has the advantage that the bacteria are removed from the water supply before the packing material, so that the packing material does not become a breeding ground for bacterial growth. Any bacterial filter incorporated into the cartridge will however require regular removal and cleaning since the small pore size encourages clogging.

For maximum effectiveness, most packing materials will require a certain contact time with the water flowing through them. Accordingly the invention may provide means, such as a constriction in the water flow path, for limiting the flow of water through the packing material to a rate at which the filtering, disinfecting or chemical treatment effect of the packing material is most efficient.

### Drawings

Figure 1 is a front view of a water treatment and delivery apparatus according to the invention;
Figure 2 is a side view, partly in section, of the apparatus of Figure 1;
Figure 3 is a side view, partly in section, of a second water treatment and delivery apparatus according to the invention; and
Figure 4 is a section taken along the line IV-IV of Figure 3.

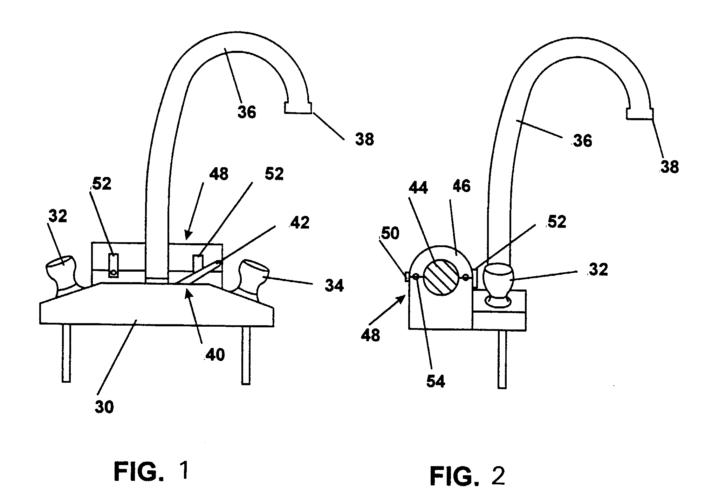

Referring first to Figures 1 and 2, the apparatus of the invention comprises a valve block 30 which is provided with hot and cold taps 32 and 34 for controlling the delivery of untreated water at mains pressure through a delivery spout 36. Depending on local water authority requirements, it may be necessary to divide the delivery spout 36 into separate passages, one for the hot water supply and one for the cold water supply, so that the two water supplies mix together only at the outlet nozzle 38.

In the valve block 30 there is a third valve 40 controlled by an operating lever 42 for controlling the supply of cold water at mains pressure through a water treatment cartridge 44 to the delivery spout 36. In the delivery spout 36, the water delivered by the lever 42 through the treatment cartridge 44 may pass through the same cold water passage in the spout 36 as the untreated water controlled by the tap 34; or it may have its own dedicated water passage.

Figure 2 illustrates schematically one possible form of quick release access to the cartridge 44 for ease of replacement. A lid portion 46 of a cartridge-receiving chamber 48 is hinged at 50 and is provided with two snap-over latches 52. To change the cartridge, it is simply necessary to unfasten the latches 52, raise the lid 46, lift out the old cartridge 44 and drop in a new one. A rubber seal 54 around the edge of the cartridge container 48 ensures that there is no water leakage in use.

The cartridge is readily replaceable, and in this embodiment can be replaced without having to replace the entire spout. If the cartridge contains ion exchange resin, then it should be replaced every two to four weeks. This is in contrast with carbon filters, which have up until now been provided in under-sink installations and which require changing only every one, two or even three years. The water supply to the apparatus of the invention is completely untreated domestic mains water, in which case it is desirable for the cartridge 44 to contain both a filter medium and an ion exchange resin or other chemical treatment means. In that case the carbon filter medium would be replaced rather more frequently than is strictly necessary, but the cartridge would still need to be replaced every two to four weeks to renew the exhausted ion exchange resin.

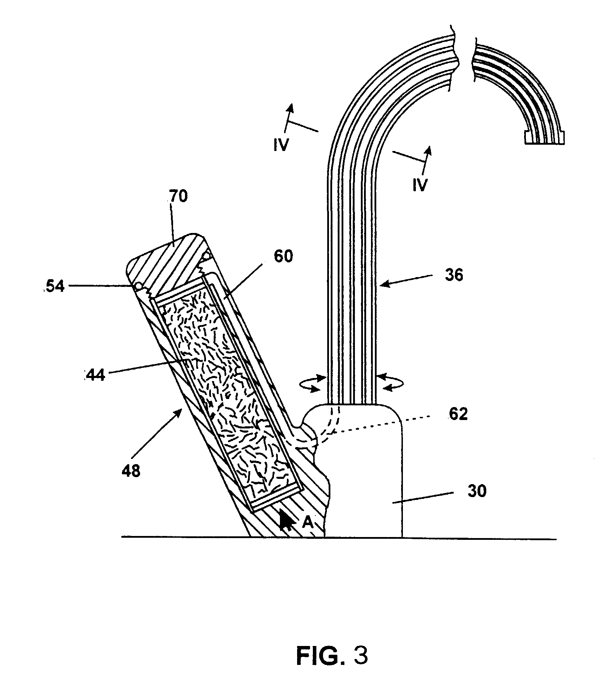

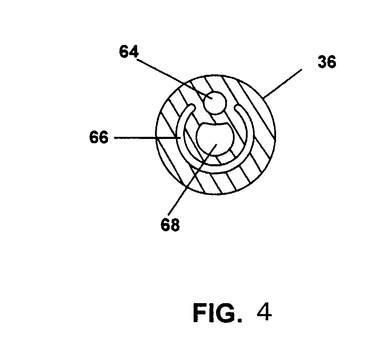

Figures 3 and 4 illustrate a second embodiment of the invention, and use the same reference numerals as those used in Figures 1 and 2 for the same or analogous parts. In Figure 3 the taps 32 and 34 and drinking water lever 42 are not shown, but it will be understood that the same hot and cold water controls will be provided in the valve block 30. Depression of the lever 42 establishes a supply of mains cold water to the cartridge 44 in the direction of the arrow A, to cause water to flow the packing material in the cartridge 44 to the top of the chamber 48. From there it passes down a conduit 60 moulded in a side wall of the chamber 48 to a bore 62 in the valve block 30 which communicates with a passage 64 for treated water in the spout 36. Figure 4 illustrates the internal partitioning of the spout 36 which defines separate passages 64, 66 and 68 for, respectively, treated drinking water, untreated cold water and untreated hot water.

Changing the filter cartridge of Figure 3 is simple. With the lever 42 not depressed, the water supply to the chamber 48 is cut off. A cap 70 is unscrewed, and the old filter cartridge 44 is lifted out and replaced by a new one. The cap 70 is then replaced, with a water seal being established by the O-ring seal 54.

In both the embodiment of Figures 1 and 2 and that of Figures 3 and 4, the apparatus can supply, from the same nozzle, domestic hot water, domestic cold water or treated drinking water. The water supply to the apparatus is, however, simply a domestic hot and cold water supply. No under-sink filter is needed, and neither is there any separate spout for the drinking water delivery. The filter in both illustrated embodiments is in the form of a replaceable cartridge to give maximum ease of replacement above-sink, and maximum economy.

## Claims

1. A water treatment and delivery apparatus comprising a composite valve block (30) incorporating taps or faucets (32,34,40) for the independent supply of domestic hot water, domestic cold water and treated drinking water to a single delivery spout; characterized in that only two water supplies are provided to the valve block (30): a domestic hot water supply and a domestic cold water supply, and the tap or faucet (40) for supplying treated drinking water to the delivery spout (36) delivers water from the domestic cold water supply to a chamber (48) containing packing material for filtering and/or deionizing and/or chemically treating the water as it passes to an output nozzle (38) of the delivery spout (36).

2. Apparatus according to claim 1, wherein the packing material is an ion exchange resin.

3. Apparatus according to claim 1, wherein the packing material comprises a filter material and an ion exchange resin.

4. Apparatus according to claim 3, wherein the filter material in the packing material is active carbon.

5. Apparatuss according to any preceding claim, wherein the chamber (48) also contains a bacterial filter for removing bacteria from the water as it passes to the output nozzle (38).

6. Apparatus according to any preceding claim, wherein the packing material is encapsulated in the delivery spout (36) which is simply replaced in its entirety to replace the packing material.

7. Apparatus according to any of claims 1 to 5, wherein the packing material is contained in a replaceable cartridge receivable in the chamber (48).

8. Apparatus according to claim 7, wherein the chamber (48) is in the delivery spout (36).

9. Apparatus according to claim 7, wherein the chamber (48) is in the valve block (30).

10. Apparatus according to any preceding claim, wherein the delivery spout (36) comprises three separate passages: one (66) for untreated cold domestic water; a second (68) for untreated hot domestic water; and the third (64) for the treated drinking water.
